# EUROPEAN PATENT SPECIFICATION

(11) **EP 2 716 432 B1**
(45) Date of publication and mention of the grant of the patent: **19.08.2015**
(21) Application number: 12187492.9
(22) Date of filing: 05.10.2012
(51) Int. Cl.: B29C 65/76, B32B 5/02, B32B 5/18, B32B 7/06, C09J 7/02

(54) **Method of cleaving an adhesive joint**
Verfahren zum Spalten einer Klebeverbindung
Procédé de clivage d'un joint adhésif

(43) Date of publication of application: 09.04.2014
(73) Proprietor: 3M Innovative Properties Company, Saint Paul, MN 55133-3427 (US)
(72) Inventor: Frisch, Ruediger Thomas, 41453 Neuss (DE); Wieneke, Jan Ulrich, 41453 Neuss (DE)
(74) Representative: Gabriel, Kiroubagaranne

(56) References cited:
- US-B1- 6 558 789

## Description

### Technical Field of the Invention

The present invention relates to an adhesive assembly comprising a polymeric foam layer provided with high tear resistant fibers. The present invention is also directed to a method of cleaving an adhesive joint between two support surfaces.

### Background of the Invention

Laminated tape structures including a central layer of polymeric film or foam with layers of adhesive on its major surfaces have been used to bond the opposed surfaces of two similar or dissimilar substrates together, such as to bond a wall hanging such as a poster, plaque, or a picture to a wall. When such a tape structure, in which the adhesive is a high tack pressure sensitive adhesive (such as e.g. 3M Acrylic Foam Tape or 3M VHB Tape), is used for that purpose, it is often difficult to later separate the objects as the formed structure is very stable. Moreover, these tape structures are generally positioned in a very narrow area between the objects where it is therefore not readily accessible, in particular when the tape structure is located between a rigid wall hanging and a wall.

Typically, an attempt to de-bond the objects is made by either cutting through the tape structure using a knife, wire or power-tool (such as e.g. a multi-master), or one object is twisted on or pulled from the other object, which often results in damages to one or both of the objects. In case the cutting option is used, at least one side of the tape structure shall be directly accessible by the cutting tool. Also, polymeric foam layers are generally sticky and tend to transfer residues to the tool, which complicates the separation even further. In case no side of the tape structure is accessible by a tool, the cutting option may not be practiced at all.

The bonding of windows to trains, buses and cars requires that windows be conveniently removed if they are damaged or broken by e.g. vandalism, stone-chipping or excessive vibration. In the window replacement industry, it is required that a new window can be placed easily and as quickly as possible. A complex and time-consuming removal of adhesive residue is therefore not accepted. In general, PU-based adhesives are used for these applications. For the removal of a damaged window, the adhesive is cut with a knife or electrical tool and the new window is applied with a PU adhesive again, since PU adhesives stick on PU residues.

The use of a tape structure would tremendously simplify the window placement process, as windows could be pre-equipped with a tape structure provided with a suitable release liner which would then simply need to be removed prior to the placement of the window. Tape structures having a central polymeric foam layer (such as e.g. 3M VHB Tape) would be particularly well suited for these applications due to their ability to compensate elongation differences. The expected disadvantage would be the need for complete removal of the tape structure from the substrate (e.g. metallic frame or painted metal surface) onto which it might be applied. Due to the excellent adhesion they provide, these tape structures, and in particular the residues remaining after cutting through the tape are particularly challenging to remove. Hitherto, only mechanical abrasion has been proved to be a suitable method to remove these tape residues.

US 6,004,642 discloses a tape laminate comprising an internally separable layer. EP-A1-1 044 797 describes a method of mounting ceramic tiles by means of an acrylic foam pressure sensitive adhesive. WO-A1-01/85863 discloses a foam-coated flexible web which is claimed to be particularly applicable for use as an adhesive tape, such as cable wrap or harness tape, wherein the flexible web includes a substrate of two-dimensional fabric material embedded in a layer of polymer foam. The primary function of the substrate described in WO-A1-01/85863 is to provide the foam layer with a degree of robustness and dimensional stability. US 5,679,437 discloses a removable laminated roadway marking tape for temporary marking of roadway surfaces, which comprises a mesh reinforcement layer in the form of an open polyester netting.

Without contesting the technical advantages associated with the solutions disclosed in the art, there is still a need for a convenient and efficient method of cleaving an adhesive joint between two support surfaces, which would overcome the deficiencies previously mentioned.

Other advantages of the coatings, coated articles and methods of the invention will be apparent from the following description.

### Summary of the Invention

According to one aspect, the present invention relates to method of cleaving an adhesive joint between two support surfaces, the method comprising the steps of:
a) providing a polymeric foam layer comprising a plurality of fibers having a tenacity of above 30 cN/tex when measured according to test method DIN EN ISO 5079, wherein said fibers are at least partially embedded in said polymeric foam layer;
b) forming an adhesive joint between two support surfaces with said polymeric foam;
c) mechanically extracting at least part of said plurality of embedded fibers out of said polymeric foam layer thereby cleaving or at least partially weakening the adhesive joint formed with said polymeric foam layer;
d) optionally, separating said two support surfaces; and
e) optionally, removing the portions of polymeric foam layer still remaining on said two support surfaces.

According to another aspect, the present invention relates to an adhesive assembly comprising a polymeric foam layer having two opposite major surfaces and a stretch releasing adhesive strip arranged on at least one major surface of said polymeric foam layer, wherein said polymeric foam layer comprises a plurality of fibers at least partially embedded in said polymer foam layer and having a tenacity of above 30 cN/tex, when measured according to test method DIN EN ISO 5079.

In still another aspect, the present invention is directed to the use of a an adhesive assembly as above described for adhering a glass panel onto a substrate, preferably a metallic support.

### Brief Description of the Figures

Figure 1 schematically represents one aspect of the method according to the present invention.
Figure 2 schematically represents a second aspect of the method according to the present invention, as well as one aspect of the adhesive assembly according to the invention.
Figure 3 schematically represents two exemplary hooking devices for use in the method according to one aspect of the present invention.
Figure 4 schematically represents a first exemplary production process of a polymeric foam layer for use in the method according to one aspect of the present invention and of one aspect of an adhesive assembly according to the invention.
Figure 5 schematically represents a second exemplary production process of a polymeric foam layer for use in the method according to one aspect of the present invention and of one aspect of an adhesive assembly according to the invention.
Figure 6 schematically represents a third exemplary production process of a polymeric foam layer for use in the method according to one aspect of the present invention and of one aspect of an adhesive assembly according to the invention.

### Detailed description of the invention

According to one aspect, the present invention relates to method of cleaving an adhesive joint between two support surfaces, the method comprising the steps of:
a) providing a polymeric foam layer comprising a plurality of fibers having a tenacity of above 30 cN/tex when measured according to test method DIN EN ISO 5079, wherein said fibers are at least partially embedded in the polymeric foam layer;
b) forming an adhesive joint between two support surfaces with the polymeric foam;
c) mechanically extracting at least part of the plurality of embedded fibers out of the polymeric foam layer thereby cleaving or at least partially weakening the adhesive joint formed with the polymeric foam layer;
d) optionally, separating the two support surfaces; and
e) optionally, removing the portions of polymeric foam layer still remaining on the two support surfaces.

The method of the present invention has been found to provide convenient and efficient cleaving of an adhesive joint, in particular a high performance adhesive joint, between two support surfaces. High performance adhesive joints are typically provided by polymeric foam layers having pressure sensitive adhesive characteristics, in particular acrylic foam layers, optionally in combination with a suitable further pressure sensitive adhesive.

In a preferred aspect of the method according to the invention, the adhesive joint between the two support surfaces is formed by a pressure sensitive adhesive layer comprising the polymeric foam or alternatively, by a layer assembly of a layer comprising the polymeric foam and (at least one) a pressure sensitive adhesive layer.

### POLYMERIC FOAM LAYER

Suitable polymeric foam layers for use herein will be easily identified by those skilled in the art, in the light of the present description. In the context of the present invention, the term "polymeric foam" is meant to designate a material based on a polymer and which material comprises voids, typically in an amount of at least 5% by volume, preferably 10% to 30% by volume. The voids may be obtained by any of the known methods such as cells formed by gas. Alternatively, the voids may result from the incorporation of hollow fillers, such as hollow polymeric particles, hollow glass or hollow ceramic microspheres.

The polymeric foam layer may comprise a single pressure sensitive adhesive layer (so called self-stick foams) or alternatively, a layer containing polymeric foam may be provided with one or more thin pressure sensitive adhesive layers on its surfaces. The use of a polymeric foam provides a strong bond between various similar or dissimilar support surfaces.

In a preferred aspect, the polymeric foam layer for use in the present invention, comprises a material selected from the group consisting of polyacrylates, polyurethanes, polyolefins, polystyrenes, polyvinyls, natural rubbers, synthetic rubbers, and any combinations or mixtures thereof. More preferably, the polymeric foam layer comprises a material selected from the group consisting of polyacrylates, polyurethanes, and any combinations or mixtures thereof. Even more preferably, the polymeric foam layer comprises a material selected from the group consisting of polyacrylates.

In a more preferred aspect, the polymeric foam layer for use in the present invention, is based on a polymer of an alkyl ester of acrylic or methacrylic acid (hereinafter referred to as "acrylic polymer"). The corresponding polymeric foam layer may also be referred to as "acrylic foam". Preferably, the acrylic polymer is a polymer of 50 to 100 parts by weight of substituted or unsubstituted alkyl acrylate or alkyl methacrylate monomers whose homopolymers exhibit a glass transition temperature of 0°C or less (collectively referred to hereinafter as "acrylate monomer") and 0 to 50 parts by weight of copolymerizable reinforcing monoethylenically unsaturated monomer, whose homopolymer preferably exhibits a glass transition temperature of 10°C or greater.

Examples of this type of polymer include copolymers of 88-99 parts by weight of alkyl acrylate having an average of 4-12 carbon atoms (herein referred to as "C4-12 ") in the alkyl groups and 12 to 1 parts by weight of at least one of acrylic acid, methacrylic acid, itaconic acid, acrylamide and methacrylamide. Other useful reinforcing monoethylenically-unsaturated monomers which are copolymerizable with acrylate monomer include N-substituted acrylamides, acrylonitrile, methacrylonitrile, hydroxyalkyl acrylates, cyanoethyl acrylate, maleic anhydride, and N-vinyl-2-pyrrolidone, all of which result in pressure-sensitive adhesives which are tacky at ordinary room temperature when used with C4-12 alkyl acrylate in amounts up to about 12 mol percent of the acrylate monomer, or up to about 50 mol percent when the copolymerizable monomer is mainly N-vinylpyrrolidone. Other copolymerizable monomers that can be useful include alkyl vinyl ethers, vinylidene chloride, styrene, and vinyltoluene.

The polymeric foam layer for use in the invention need not be tacky. If such a polymeric foam layer is used in this invention, it is laminated to or coated with a relatively thin pressure-sensitive adhesive layer to provide a pressure sensitive adhesive layer assembly. Alternatively, the thin pressure-sensitive adhesive layer may be co-extruded with the polymeric foam layer, or subsequently extruded on the polymeric foam layer surface. Preferably, such a thin pressure sensitive adhesive layer comprises an acrylic polymer such as for example a polymer as described above. The thin pressure sensitive adhesive layer may be provided on one major side of the acrylic foam layer but is preferably provided on both major sides of the polymeric foam layer.

The polymeric foam layer for use in the invention preferably has a thickness comprised between 150 and 6000 µm, preferably between 200 and 3000 µm, more preferably between 500 and 1500 µm, even more preferably between 800 and 1500 µm. As will be apparent to those skilled in the art, the preferred thickness of the polymeric foam layer will be dependent on the intended application.

The polymeric foam layer preferably has a density comprised between 0.45 and 0.95, more preferably between 0.50 and 0.95, even more preferably between 0.60 and 0.95, still more preferably between 0.70 and 0.95. This density is achieved by including voids or cells. Typically, the polymeric foam layer will comprise at least 5% of voids and preferably between 15 and 45 %, more preferably between 20 and 30 % of voids on a volume basis.

The voids or cells in the acrylic foam can be created in any of the known manners described in the art and include the use of a gas or blowing agent and/or including hollow particles into the composition for the polymeric foam layer. For example, according to one method to create a polymeric foam described in US 4,415,615, the acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated.

If the viscosity of a mixture of polymerizable monomers is too low to provide a coatable froth, the monomers may be partially polymerized prior to frothing to provide a composition having a viscosity in the range of about 1000 to 40,000 cps, conveniently by mixing a photoactive polymerization initiator with the monomers and exposing the mixture to ultraviolet radiation. Viscosities above 5000 cps tend to provide better cell uniformity, whereas viscosities below 15,000 cps are preferred for ease of handling. Instead of employing ultraviolet radiation, a heat-activatable polymerization initiator may be mixed with the monomers to provide a mixture which can be partially polymerized by heat to the desired viscosity prior to frothing. A third technique which has been successful is to mix the monomers with a thixotropic agent such as fumed silica, carrying out the entire polymerization in a single in situ step after coating.

If the monomer mixture has been photopolymerized to provide a froth of coatable viscosity, it may contain sufficient residual initiator to allow the coated froth to be fully polymerized under ultraviolet radiation. However, it is usually desirable to add further photoinitiator which may also be capable of crosslinking the polymer. If the monomers are partially polymerized thermally and the polymerization is to be completed in situ by heat, it is usually necessary to add additional heat-activatable polymerization initiator to the partially polymerized composition.

To increase the cohesive strength of the polymeric foam, the polymerizable composition preferably includes a cross-linking agent. Useful crosslinking agents which also function as photopolymerization initiators are disclosed in U.S. Pat. Nos. 4,330,590 (Vesley) and 4,329,384 (Vesley, Moon). Other suitable crosslinking agents include polyacrylicfunctional monomers such a trimethylolpropane triacrylate and 1,2-ethylene glycol diacrylate.

In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, and DE 10 2008 059 050 A, the relevant contents of which are herewith incorporated by reference. Suitable accelerant and retardant systems for use herein are described e.g. in the description of US-A1-2011/0281964, the relevant content of which is herewith explicitly incorporated by reference. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500.

Aside from thermal, moisture or photosensitive crosslinking agents, crosslinking may achieve using high energy electromagnetic radiation such as gamma or e-beam radiation.

Alternatively, an acrylic foam may be obtained by including hollow particles i.e., hollow microspheres into a polymerizable composition for making the polymeric foam. Examples of hollow microspheres include expanded or expandable thermoplastic polymer microspheres and glass microbubbles. Examples of expanded or expandable thermoplastic polymer microspheres are disclosed in US Patent No. 4,855,170 and include the commercially available hollow polymeric microspheres from Pierce & Stevens Company under the tradename MICROLITE™ and MIRALITE™. Further commercially available expanded or expandable polymeric microspheres include EXPANCEL™ (Kema Nord Plastics) and MICROPEARL™ (Matsomoto Yushi Seiyaku). The hollow thermoplastic polymer microspheres typically have an average diameter of 5 to 150 microns, preferably 10 to 100 microns.

Suitable glass microbubbles preferably have an average diameter of 10-200 micrometers. Microbubbles of smaller average diameter would tend to be unduly expensive, whereas it would be difficult to coat out a polymerizable mixture containing microbubbles of larger average diameter. Preferably the average diameter of the microbubbles is within the range of 20 to 80 micrometers. The glass microbubbles typically have a specific gravity of less than 1.

Polymeric foam layers having glass microbubbles are particularly preferred for forming an adhesive joint between two support surfaces as they will likely be less compressible than polymeric foams where voids are introduced in a different way. The polymeric foam layer may contain further additives such as dyes, pigments, fumed silica, chopped fibers, organic and inorganic fillers, catalysts and cross-linking agents to achieve specific effects.

The pressure sensitive adhesive layer or the layer assembly is preferably provided as a double-sided adhesive tape, i.e. the pressure sensitive adhesive layer or the layer assembly are protected at their major surfaces with a release liner. Commercially available double-sided adhesive tapes suitable for practicing the present invention include 3M VHB+ Tape # 4941 (thickness 1.1 mm), 3M VHB+ Tape 4936 (thickness 0.6 mm), 3M VHB Tape # 4950 (thickness 1.1 mm), 3M VHB Tape # 4930 (thickness 0.6 mm), 3M VHB Tape # 4951 (thickness 1.1 mm), 3M VHB Tape # 4929 (thickness 0.6 mm), 3M VHB Tape # 4949 (thickness 1.1 mm), 3M VHB Tape # 4910 (thickness 1.0 mm), 3M VHB Tape # 4945 (thickness 1.1 mm), 3M VHB Tape # 4943 (thickness 1.1 mm), 3M VHB Tape # 5360 (thickness 0.4 mm), 3M Acrylic Foam Tape # 4611 (thickness 1.1 mm), 3M Acrylic Foam Tape # 4655 (thickness 1.5 mm) and 3M Acrylic Foam Tape # 4646 (thickness 0.6 mm). All of the double-sided adhesive tapes described are available from 3M Company, St. Paul, MN/USA.

To adhere the adhesive tape to the surface of a first support, the release liner on one major surface is removed to expose the pressure sensitive adhesive on that side and the adhesive tape is then firmly pressed against the first support surface. Subsequently the release liner protecting the other major surface is removed and the assembly can then be adhered to the second support surface. Applying firm pressure will create a strong bond between the two support surfaces.

### FIBERS

As an essential feature of the present invention, the polymeric foam layer for use in the present invention, comprises a plurality of fibers having a tenacity of above 30 cN/tex when measured according to test method DIN EN ISO 5079, wherein the fibers are at least partially embedded in the polymeric foam layer.

In the context of the present invention, the expression "the fibers are at least partially embedded in the polymeric foam layer" is meant to express that at least a portion of the individual fibers or yarns of fibers are substantially embedded , i.e. over their full circumference, embedded in the polymeric foam layer.

In a preferred aspect of the invention, the plurality of fibers are fully embedded in the polymeric foam layer. Still preferably, any other layers possibly arranged on the polymeric foam layer are substantially free of fibers.

Any fibers commonly know in the art and meeting the tenacity requirement, as detailed above, may be used in the context of the present invention. Suitable fibers for use herein may be easily identified by those skilled in the art, in the light of the present description. Exemplary fibers for use herein comprise natural, organic or inorganic material. Preferably, the fibers for use herein comprise a material selected from the group consisting of hemp, kenaf, sisal, coal, silk, viscose, glass, E-glass, liquid crystal polymers (e.g. Vectran), polyethylene, polypropylene, UHMW-polyethylene, polyester, polyamide, aramid, carbon, nylon, rayon, polybenzimidazole, poly(m-phenylene-isophthalamide), poly(p-phenylene-terephthalamide), poly(p-phenylene-2,6-benzobisoxazole (Zylon), polyamide-hydrazide, metal (in particular steel), and any combinations or mixtures thereof. More preferably, the fibers for use herein comprise a material selected from the group consisting of UHMW-polyethylene, aramid, polyester, liquid crystal polymers, poly(p-phenylene-2,6-benzobisoxazole, steel, and any combinations or mixtures thereof.

According to a preferred aspect of the invention, the fibers have a tenacity of above 50, preferably above 80, more preferably above 100, even more preferably above 150, still more preferably above 200, yet more preferably above 250 cN/tex, when measured according to test method DIN EN ISO 5079. Typically, the fibers for use herein have a tenacity of below 400, in particular below 350 cN/tex, when measured according to test method DIN EN ISO 5079.

Preferably still, the fibers have an average diameter comprised between 10 and 500 µm, preferably between 30 and 250 µm, more preferably between 50 and 150 µm.

In the context of the present invention, it is preferred that the plurality of fibers is arranged substantially in the longitudinal direction of the polymeric foam layer, and preferably in such a way that the fibers are substantially parallel to each other. The polymeric foam layer is typically applied in the form of a tape or strip, and it is preferred that the fibers are arranged in the longitudinal direction of the tape formed by the polymeric foam. This configuration will facilitate the step of mechanically extracting at least part of the plurality of embedded fibers out of the polymeric foam layer thereby rendering the cleaving of the adhesive joint formed with the polymeric foam layer more efficient.

According to another preferred aspect, the fibers for use herein are arranged into a plurality of yarns of fibers. In the context of the present invention, the terms yarn of fibers and thread of fibers may be used interchangeably. Similarly, the terms fiber and filament are meant to be equivalent.

According to a preferred execution of the invention, the plurality of fibers is arranged in a virtual two-dimensional plan, which is preferably parallel to the plans formed by the two opposite major surfaces of the polymeric foam layer. Typically, the plurality of fibers is arranged in a virtual two-dimensional plan which is preferably parallel to and located in the vicinity of the plan formed by one of the two opposite major surfaces of the polymeric foam layer. However, a configuration according to which the plurality of fibers is arranged in a virtual two-dimensional plan located in the middle of the polymeric foam layer, i.e. at equidistance of the plans formed by the two opposite major surfaces of the polymeric foam layer, is also usable. The plurality of fibers may also be arranged in a plurality of virtual two-dimensional plans.

According to another preferred execution of the invention, the plurality of fibers is arranged in such a way as to form a netting or a web of fibers. The plurality of fibers may also be arranged in such a way as to form a netting or a web of yarns of fibers. This particular configuration is meant to facilitate the step of mechanically extracting at least part of the plurality of embedded fibers out of the polymeric foam layer thereby rendering the cleaving of the adhesive joint formed with the polymeric foam layer more efficient. The plurality of fibers may also be arranged in such a way as to form a plurality of nettings or webs of yarns of fibers.

In another preferred aspect of the method according to the present invention, the step of mechanically extracting at least part of the plurality of embedded fibers out of the polymeric foam layer, comprises the steps of:
a) inserting a hooking device (substantially or exclusively) through the polymeric foam layer;
b) extracting the hooking device in a such way as to grab at least part of the plurality of embedded fibers during the extraction step; and
c) optionally, extracting the remaining fibers still embedded the polymeric foam layer after the step of extracting the hooking device.

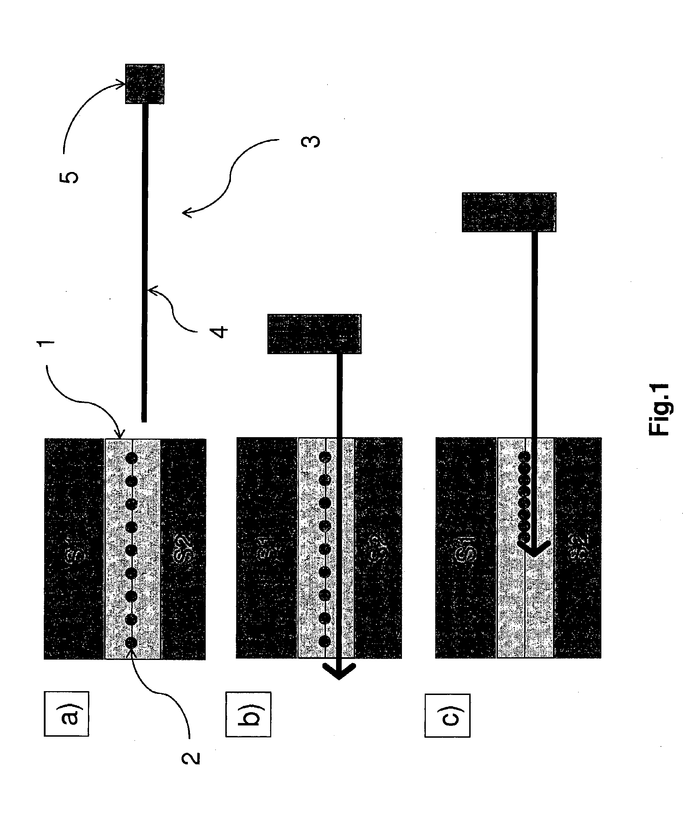

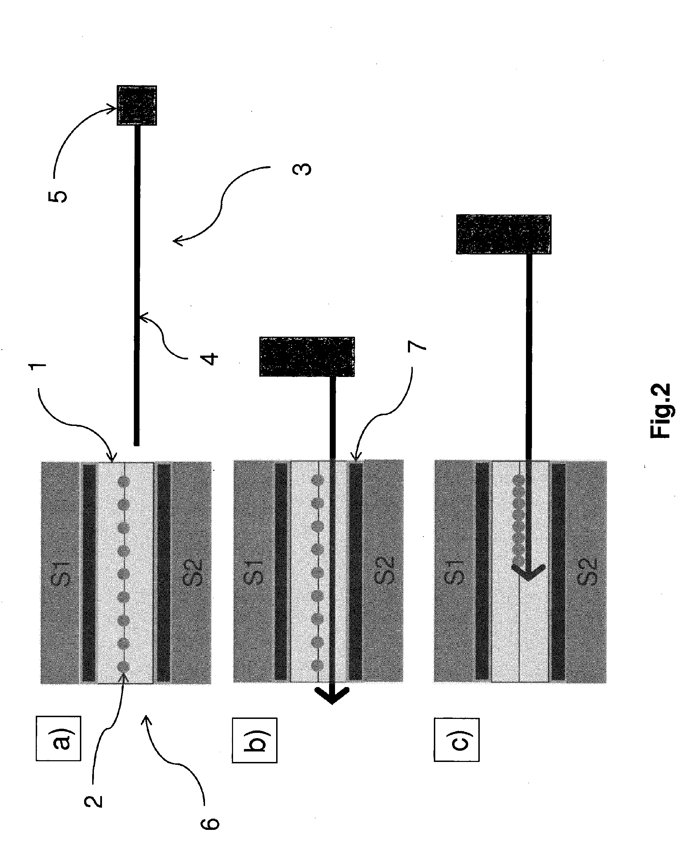

This preferred execution of the method of the invention is conveniently and schematically represented in **Fig.1** and **Fig.2****,** which will be detailed hereinafter.

Preferably, the step of extracting the hooking device in a such way as to grab at least part of the plurality of embedded fibers during the extraction step is performed at an angle of below 90°, preferably of below 70°, more preferably of below 50°, even more preferably of below 45°, still more preferably of below 20°, yet more preferably of below 10°, most preferably at an angle of about 0°, when measured with respect to the plane formed by the major surface of the polymeric foam layer.

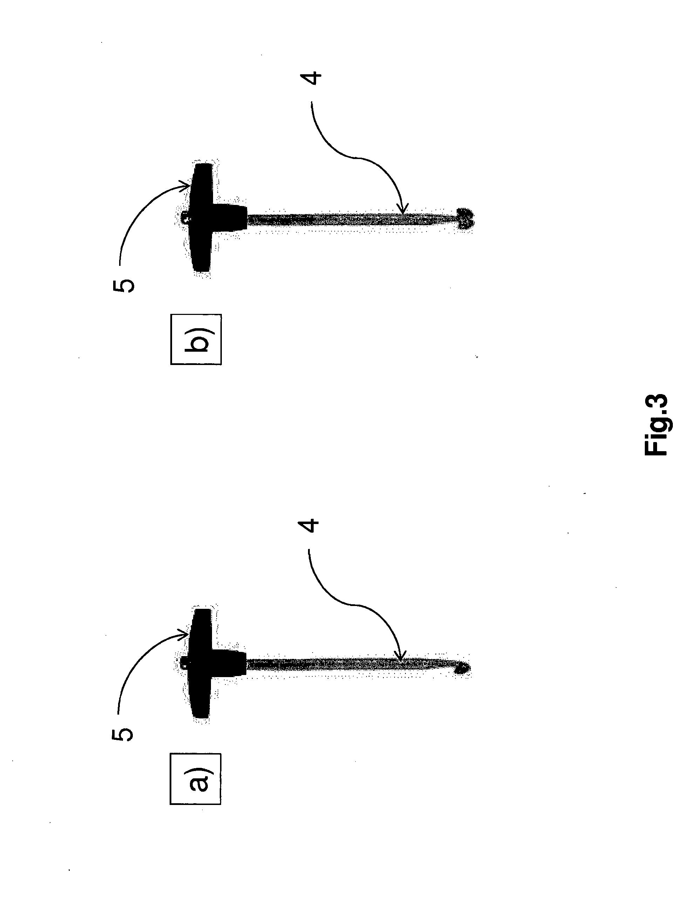

Exemplary, but not limiting, hooking devices suitable for use in the present invention are described in **Fig.3****,** which will be detailed hereinafter. Suitable hooking devices may take the form of a crochet hook comprising a handle and a blade with a hooking portion at the extremity of the blade. The hooking portion may comprise one or, preferably, two hooks mounted on opposite sides so as to permit grabbing the fibers independently from the side of the hooking device they are located after the intrusion process. Advantageously, the blade of the hooking device may be covered with a lubricant or a coating that reduces the adhesion to the polymeric foam layer. Exemplary lubricants or coatings include, but are not limited to, oil, detergent, silicone or PTFE. Typically, the width of the blade is lower than the thickness of the polymeric foam layer. For the step of extracting the hooking device in a such way as to grab at least part of the plurality of embedded fibers during the extraction step, it is preferred to initially apply a 90° rotation to the hooking device before its extraction. In a preferred aspect, the width of the blade shall be selected so as to match as much as possible the thickness of the polymeric foam layer, so as to increase the percentage of fibers or filaments grabbed during the hooking device extraction step.

### STRETCH RELEASING ADHESIVE BONDING TAPE

According to a preferred aspect of the invention, the polymeric foam layer having two major opposite surfaces further comprises a stretch releasing adhesive bonding tape arranged on at least one major surface of the polymeric foam layer.

Any stretch releasing adhesive bonding tape commonly known in the art may be used in the context of the present invention. Suitable stretch releasing adhesive bonding tape for use herein may be easily identified by those skilled in the art, in the light of the present description. Exemplary stretch releasing adhesive bonding tapes for use herein are described e.g. in US 6,403,206 and US 6,558,789 which provides an adhesive tape comprising a backing and a first layer of pressure sensitive adhesive composition coated on at least one surface of the backing. The tape is capable of being firmly bonded to a substrate and thereafter being removable therefrom after being stretched at an angle no greater than about 35° from the surface of the substrate without the backing rupturing prior to the removal of the tape from the substrate and without leaving substantial pressure sensitive adhesive residue on the substrate.

Thus, to provide a stretch releasing adhesive tape, a polymeric film backing of an adhesive tape, in particular a pressure sensitive adhesive tape, may be used. The polymeric film backing of the adhesive tape may further have on the major surface opposite to the major surface having the adhesive, a release material. Such release material may be any of the known materials used for their release properties for adhesives and is preferably a silicone release material such as silicones and modified silicones, the modification including both copolymerization of silicones with other nonrelease chemical agents or by adding nonsilicone materials to the silicone release coating solution. Silicone release coatings are described in Chapter 24, pp. 601 - 626, from HANDBOOK OF PRESSURE-SENSITIVE ADHESIVE (Second Edition, 1989, D. Satas, ed., Van Nostrand Rheinhold).

Further examples of release materials that can be provided to the polymeric film include waxes, long chain branched polymers, fluorocarbons, the Werner-type chromium complexes, and polyvinyl carbamates, as described in the Chapter 23 "Release Coatings", pp. 585 - 600, from HANDBOOK OF PRESSURE-SENSITIVE ADHESIVE (Second Edition, 1989, D. Satas, ed., Van Nostrand Rheinhold).

Release materials may be applied from solution or as 100% solids coatings and can be optionally radiation cured. They may be applied in a continuous manner or in a pattern of stripes of discontinuous spots.

In the context of the present invention, the release material that can be provided to the polymeric film may be suitable removed at the appropriate timing in the process of manufacturing e.g. an adhesive assembly according to the invention.

Examples of polymeric film backings that can be used include, polyester film, polyethylene and polypropylene films. In case the surface of the polymeric film itself already has the desired release characteristics, it will not be necessary to provide that surface with a release material. For example, a low density polyethylene film may already have the desired release characteristics without the aid of a release coating as described above. Further, the desired release characteristics can also be introduced to a polymeric film which ordinarily has limited release characteristics by embossing the film.

Commercially available adhesive tapes that can be used to provide a release layer on a substrate include thin, single sided pressure-sensitive adhesive tapes based on polymeric film backings, including those adhesive tapes commonly used as box-sealing tapes, such as Scotch™ Tape # 371 (thickness 48 microns), Tartan ™ Tape # 369 (thickness 43 microns), Scotch ™ Tape # 370 (thickness 48 microns), Scotch ™ Tape # 375 (thickness 75 microns), Scotch ™ Tape # 3739 (thickness 56 microns), Scotch ™ Tape # 351 (total thickness 70 microns) and Scotch ™ Tape # 5290 (total thickness 85 microns). All single-sided pressure-sensitive tape described above are available from 3M Company, St. Paul, MN/USA. When the release layer is provided from an adhesive tape as described above, it is preferred that the adhesive of such an adhesive tape provides for a strong bond between the release layer and the substrate.

In a preferred aspect of the method of the invention, the stretch releasing adhesive tape comprises a polymeric film backing comprising two opposite major surfaces and a pressure sensitive adhesive layer coated on at least one major surface of said polymeric film backing. Preferably, the polymeric film backing comprises a material selected from the group consisting of polyolefins, polyacrylates, polyurethanes, polystyrenes, polyvinyls, polyamides, and any combinations or mixtures thereof.

### ADHESIVE ASSEMBLY

According to another aspect, the present invention relates to an adhesive assembly comprising a polymeric foam layer having two opposite major surfaces and a stretch releasing adhesive tape arranged on at least one major surface of the polymeric foam layer, wherein the polymeric foam layer comprises a plurality of fibers at least partially embedded in said polymer foam layer and having a tenacity of above 30 cN/tex, when measured according to test method DIN EN ISO 5079.

In a preferred aspect, the stretch releasing adhesive strip for use in the adhesive assembly comprises a polymeric film backing comprising two opposite major surfaces and a pressure sensitive adhesive layer coated on at least one major surface of the polymeric film backing. Preferably, the polymeric film backing comprises a material selected from the group consisting of polyolefins, polyacrylates, polyurethanes, polystyrenes, polyvinyls, polyamides, and any combinations or mixtures thereof.

According to a preferred execution of the adhesive assembly, a pressure sensitive adhesive layer is comprised between the polymeric foam layer and the stretch releasing adhesive tape.

Polymeric foam layers, stretch releasing adhesive tapes, fibers, and preferred executions thereof, for use in the adhesive assembly of the invention are as described above. Accordingly, in a preferred aspect, the fibers have a tenacity of above 50, preferably above 80, more preferably above 100, even more preferably above 150, still more preferably above 200, yet more preferably above 250 cN/tex, when measured according to test method DIN EN ISO 5079.

Preferably, the fibers comprise a natural, organic or inorganic material selected from the group consisting of hemp, kenaf, sisal, coal, silk, viscose, glass, E-glass, liquid crystal polymers, polyethylene, polypropylene, UHMW-polyethylene, polyester, polyamide, aramid, carbon, nylon, rayon, polybenzimidazole, poly(m-phenylene-isophthalamide), poly(p-phenylene-terephthalamide, polyamide-hydrazide, and any combinations or mixtures thereof.

In a preferred execution of the adhesive assembly according to the invention, the plurality of fibers is arranged substantially in the longitudinal direction of the polymeric foam layer, and preferably in such a way that the fibers are substantially parallel to each other. According to an advantageous aspect, the plurality of fibers is arranged in a virtual two-dimensional plan. The plurality of embedded fibers may be advantageously arranged in such a way as to form a netting.

Preferably, the polymeric foam layer comprises a material selected from the group consisting of polyacrylates, polyurethanes, polyolefins, polystyrenes, polyvinyls, natural rubbers, synthetic rubbers, and any combinations or mixtures thereof. More preferably, the polymeric foam layer comprises a material selected from the group consisting of polyacrylates, polyurethanes, and any combinations or mixtures thereof.

The polymeric foam layer for use in the adhesive assembly according to the invention preferably has a thickness comprised between 150 and 6000 µm, preferably between 200 and 3000 µm, more preferably between 500 and 1500 µm, even more preferably between 800 and 1500 µm; and the polymeric foam layer preferably comprises at least 5% by volume of voids.

Adhesive assemblies according to the invention may be manufactured according to conventional techniques such as lamination, coating, extrusion techniques, well known to those skilled in the art.

An alternative method of manufacturing adhesive assemblies according to the invention is the so-called in-line wet-on wet coating technique which involves in-line application of two or more wet layers to a substrate with subsequent curing by a photochemical method using UV light. Such a technique is fully described in the international patent application WO 2011094385-A1. The multilayer constructions produced according to this technique are smooth, homogenous and consist of layers with distinct and regular interfaces to each other, with no uncontrolled mixing at any time.

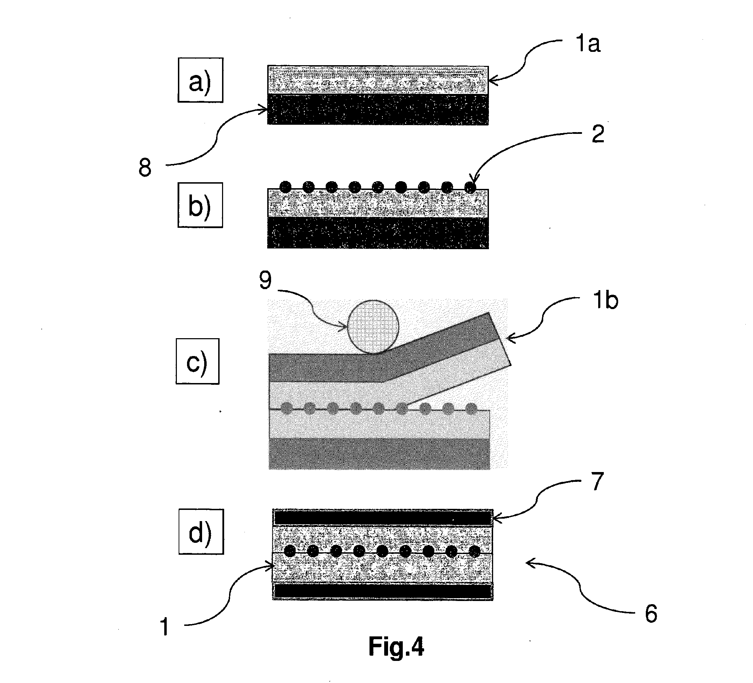

Exemplary manufacturing methods of the adhesive assemblies according to the invention are schematically represented in **Fig.4** to **Fig.6****,** which will be detailed hereinafter.

Supports between which the adhesive joint may be formed by the polymeric foam layer may be any supports commonly known to host adhesive joints.

The method and adhesive assemblies according the invention may be used in combination with various supports, in particular substrates comprising a hard surface selected from the group consisting of siliceous substrates, glass surfaces, plastic surfaces, thermoset polymeric surfaces, thermoplastic polymeric surfaces, organic polymeric substrates, ceramic surfaces, painted or clearcoated surfaces, metal surfaces, wood, gypsum, concrete, and any combinations thereof.

In one preferred aspect, the support is translucent or more preferably transparent, and is even more preferably selected from the group consisting of glass surfaces, thermoplastic polymeric surfaces, organic polymeric substrates, ceramic surfaces, and any combinations thereof. In another preferred aspect, the substrate is selected from the group consisting of metal surfaces, and any combinations thereof.

Typically, the supports for use herein are in the form of a film, sheet, panel or pane of material and may be a part of an article such as of a window, architectural glazing, decorative glass frame, motor vehicle window, windshield, TV screen, computer screen, mobile telecommunication device screen, electronic device screen, and any combinations thereof.

The invention will be further described with reference to the following schematic figures without the intention to limit the invention thereto.
**Fig.1** schematically represents one aspect of the method according to the present invention, wherein **S1** and **S2** represent respectively support 1 and support 2, and wherein a polymeric foam layer **1** comprising a plurality of embedded fibers **2** forms an adhesive joint between the two supports. According to step b) of the method depicted in **Fig.1**, a hooking device **3** comprising a blade **4** and a handle **5** is inserted through the polymeric layer **1.** In step c) of the depicted method, the hooking device **3** is extracted in such a way as to grab the plurality of embedded fibers **2.**
**Fig.2** schematically represents a second aspect of the method according to the present invention, wherein an adhesive assembly **6** is depicted which comprises a stretch releasing adhesive tape **7.**
**Fig.3** schematically represents two exemplary hooking devices **3** for use in the method according to one aspect of the present invention. In a first execution a), the hooking device **3** comprises a hooking portion at the extremity of the blade which comprises a single hook, whereas the hooking device **3** of the second execution b) comprises a hooking portion having two hooks mounted on opposite sides.
**Fig.4** schematically represents a first exemplary production process of a polymeric foam layer 1 for use in the method according to one aspect of the present invention and of one aspect of an adhesive assembly **6** according to the invention. The depicted process is based on lamination techniques. In step a) of the depicted method, a first polymeric foam layer **1a** provided with a liner **8** on one if its major surface. In step b) of the depicted method, a plurality of fibers **2** are laminated onto the uncovered major surface of the first polymeric foam layer **1a**. In step c) of the depicted method, a second polymeric foam layer **1b** is laminated with a suitable application roll **9** onto the major surface of the first polymeric foam layer **1a** comprising the fibers **2.** In step d) of the depicted method, the liners **8** are removed and stretch releasing adhesive tapes **7** are laminated on both sides of the polymeric foam layer **1,** thereby forming an adhesive assembly **6** according to the invention.

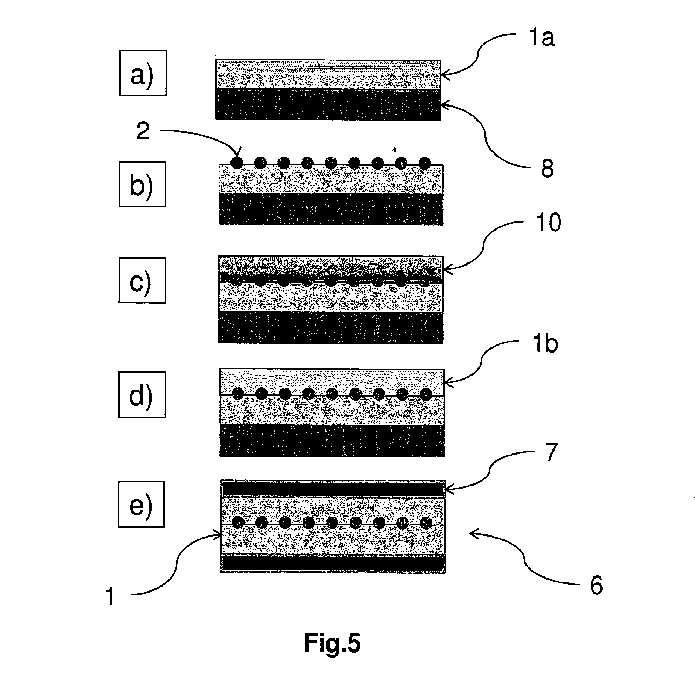

**Fig.5** schematically represents a second exemplary production process of a polymeric foam layer **1** for use in the method according to one aspect of the present invention and of one aspect of an adhesive assembly **6** according to the invention. The depicted process is based on lamination and coating techniques. In step a) of the depicted method, a first polymeric foam layer **1a** provided with a liner **8** on one if its major surface. In step b) of the depicted method, a plurality of fibers **2** are laminated onto the uncovered major surface of the first polymeric foam layer **1a.** In step c) of the depicted method, a liquid precursor **10** of second polymeric foam layer **1b** is coated in a suitable coating station onto the major surface of the first polymeric foam layer **1a** comprising the fibers **2.** In step d) of the depicted method, the liquid precursor **10** of second polymeric foam layer **1b** is appropriately cured thereby forming a second polymeric foam layer **1b.** In step e) of the depicted method, the liner **8** is removed and stretch releasing adhesive tapes **7** are laminated on both sides of the polymeric foam layer **1,** thereby forming an adhesive assembly **6** according to the invention.

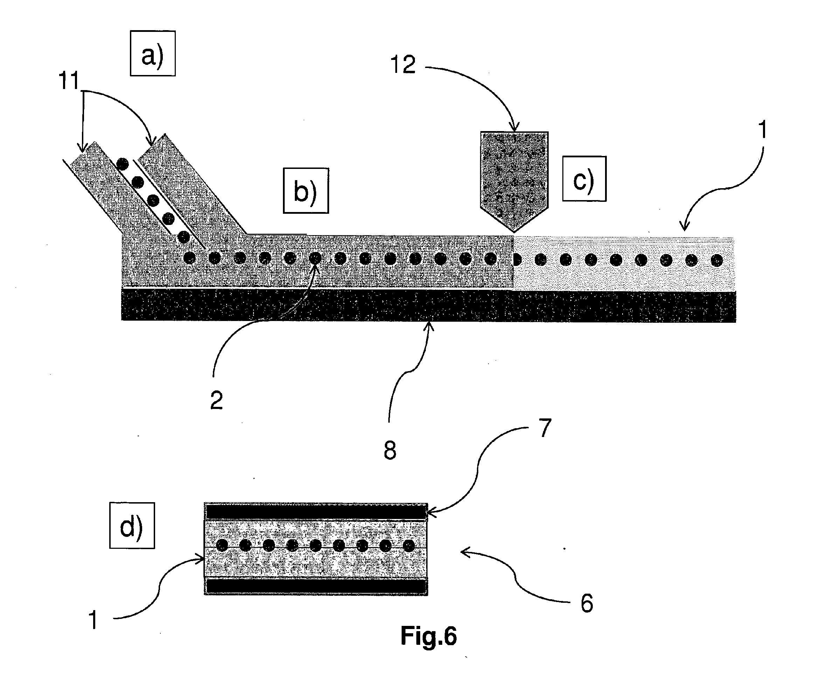

**Fig.6** schematically represents a third exemplary production process of a polymeric foam layer **1** for use in the method according to one aspect of the present invention and of one aspect of an adhesive assembly **6** according to the invention. The depicted process is based on the so-called in-line wet-on wet coating technique which involves in-line application of two or more wet layers to a substrate with subsequent curing by a photochemical method using UV light. Such a technique is fully described in the international patent application WO 2011094385-A1. In step a) of the depicted method, two wet layers **11,** which are liquid precursors of the polymeric foam layer **1,** as well as a plurality of fibers **2** are loaded into an appropriate coating station, in such as way that the plurality of fibers 2 are embedded in-between the two wet layers **11.** The assembly constituted by the two wet layers **11** and the plurality of embedded fibers **2,** is coated onto a liner **8.** In step b) of the depicted method, the assembly is foamed in an appropriate manner using e.g. the method described in patent US 4,415,615. In step c) of the depicted method, the foamed assembly resulting from step b) is appropriately cured using a curing station **12,** thereby forming a polymeric foam layer **1b** comprising a plurality of embedded fibers **2** and coated onto a liner **8.** In step d) of the depicted method, the liner **8** is removed and stretch releasing adhesive tapes **7** are laminated on both sides of the polymeric foam layer **1,** thereby forming an adhesive assembly **6** according to the invention.

According to another aspect, the present invention relates to the use of an adhesive assembly as above-described for adhering a glass panel onto a substrate, preferably a metallic support.

In still another aspect, the present invention is directed to a composite assembly comprising an adhesive assembly as above-described adhered on a substrate surface, wherein the substrate preferably comprises glass.

According to still a further aspect of the invention, it is provided a method of creating an adhesive joint between two support surfaces, the method comprising the steps of providing an adhesive assembly as above-described and adhering the adhesive assembly between the two support surfaces, wherein at least one support preferably comprises glass.

In yet another aspect, the present invention provides a method of adhering a glass panel onto a substrate, preferably a metallic support, the method comprising the steps of:
a) bonding an adhesive assembly as above-described around the contours of the glass panel; and
b) forming an adhesive joint between the glass panel and the substrate.
   Item 1 is a method of cleaving an adhesive joint between two support surfaces, the method comprising the steps of:
      a) providing a polymeric foam layer comprising a plurality of fibers having a tenacity of above 30 cN/tex when measured according to test method DIN EN ISO 5079, wherein the fibers are at least partially embedded in said polymeric foam layer;
      b) forming an adhesive joint between two support surfaces with the polymeric foam;
      c) mechanically extracting at least part of the plurality of embedded fibers out of the polymeric foam layer thereby cleaving or at least partially weakening the adhesive joint formed with the polymeric foam layer;
      d) optionally, separating the two support surfaces; and
      e) optionally, removing the portions of polymeric foam layer still remaining on the two support surfaces.
   Item 2 is the method of item 1, wherein the adhesive joint between the two support surfaces is formed by a pressure sensitive adhesive layer comprising the polymeric foam or by a layer assembly of a layer comprising the polymeric foam and a pressure sensitive adhesive layer.
   Item 3 is the method according to item 1 or 2, wherein the step of mechanically extracting at least part of the plurality of embedded fibers out of the polymeric foam layer, comprises the steps of:
      a) inserting a hooking device (substantially or exclusively) through the polymeric foam layer;
      b) extracting the hooking device in a such way as to grab at least part of the plurality of embedded fibers during the extraction step; and
      c) optionally, extracting the remaining fibers still embedded the polymeric foam layer after the step of extracting the hooking device.
   Item 4 is the method according to any of the preceding items, wherein the fibers have a tenacity of above 50, preferably above 80, more preferably above 100, even more preferably above 150, still more preferably above 200, yet more preferably above 250 cN/tex, when measured according to test method DIN EN ISO 5079.
   Item 5 is the method according to any of the preceding items, wherein the fibers have an average diameter comprised between 10 and 500 µm, preferably between 30 and 250 µm, more preferably between 50 and 150 µm.
   Item 6 is the method according to any of the preceding items, wherein the fibers comprise a natural, organic or inorganic material selected from the group consisting of hemp, kenaf, sisal, coal, silk, viscose, glass, E-glass, liquid crystal polymers, polyethylene, polypropylene, UHMW-polyethylene, polyester, polyamide, aramid, carbon, nylon, rayon, polybenzimidazole, poly(m-phenylene-isophthalamide), poly(p-phenylene-terephthalamide, polyamide-hydrazide, and any combinations or mixtures thereof.
   Item 7 is the method according to any of the preceding items, wherein the plurality of fibers is arranged substantially in the longitudinal direction of the polymeric foam layer, and preferably in such a way that the fibers are substantially parallel to each other.
   Item 8 is the method according to any of the preceding items, wherein the fibers are arranged into a plurality of yarns of fibers.
   Item 9 is the method according to any of the preceding items, wherein the plurality of fibers is arranged in a virtual two-dimensional plan.
   Item 10 is the method according to any of the preceding items, wherein the plurality of fibers is arranged in such a way as to form a netting.
   Item 11 is the method according to any of the preceding items, wherein the polymeric foam layer comprises a material selected from the group consisting of polyacrylates, polyurethanes, polyolefins, polystyrenes, polyvinyls, natural rubbers, synthetic rubbers, and any combinations or mixtures thereof.
   Item 12 is the method according to any of the preceding items, wherein the polymeric foam layer comprises a material selected from the group consisting of polyacrylates, polyurethanes, and any combinations or mixtures thereof.
   Item 13 is the method according to any of the preceding items, wherein the polymeric foam layer has a thickness comprised between 150 and 6000 µm, preferably between 200 and 3000 µm, more preferably between 500 and 1500 µm, even more preferably between 800 and 1500 µm; and wherein the polymeric foam layer preferably comprises at least 5% by volume of voids.
   Item 14 is the method according to any of the preceding items, wherein the polymeric foam layer has two major opposite surfaces and a stretch releasing adhesive bonding tape arranged on at least one major surface of the polymeric foam layer.
   Item 15 is the method according to item 14, wherein the stretch releasing adhesive bonding tape comprises a polymeric film backing comprising two opposite major surfaces and a pressure sensitive adhesive layer coated on at least one major surface of the polymeric film backing.
   Item 16 is an adhesive assembly comprising a polymeric foam layer having two opposite major surfaces and a stretch releasing adhesive bonding tape arranged on at least one major surface of the polymeric foam layer, wherein the polymeric foam layer comprises a plurality of fibers at least partially embedded in the polymer foam layer and having a tenacity of above 30 cN/tex, when measured according to test method DIN EN ISO 5079.
   Item 17 is the adhesive assembly according to item 16, wherein the stretch releasing adhesive bonding tape comprises a polymeric film backing comprising two opposite major surfaces and a pressure sensitive adhesive layer coated on at least one major surface of the polymeric film backing, wherein the polymeric film backing preferably comprises a material selected from the group consisting of polyolefins, polyacrylates, polyurethanes, polystyrenes, polyvinyls, polyamides, and any combinations or mixtures thereof.
   Item 18 is the adhesive assembly according to any of item 16 or 17, wherein a pressure sensitive adhesive layer is comprised between the polymeric foam layer and the stretch releasing adhesive bonding tape.
   Item 19 is the adhesive assembly according to any of items 16 to 18, wherein the fibers have a tenacity above 50, preferably above 80, more preferably above 100, even more preferably above 150, still more preferably above 200, yet more preferably above 250 cN/tex, when measured according to test method DIN EN ISO 5079.
   Item 20 is the adhesive assembly according to any of items 16 to 19, wherein the fibers comprise a natural, organic or inorganic material selected from the group consisting of hemp, kenaf, sisal, coal, silk, viscose, glass, E-glass, liquid crystal polymers, polyethylene, polypropylene, UHMW-polyethylene, polyester, polyamide, aramid, carbon, nylon, rayon, polybenzimidazole, poly(m-phenylene-isophthalamide), poly(p-phenylene-terephthalamide, polyamide-hydrazide, and any combinations or mixtures thereof.
   Item 21 is the adhesive assembly according to any of items 16 to 20, wherein the plurality of fibers is arranged substantially in the longitudinal direction of the polymeric foam layer, and preferably in such a way that the fibers are substantially parallel to each other.
   Item 22 is the adhesive assembly according to any of items 16 to 21, wherein the plurality of fibers is arranged in a virtual two-dimensional plan, which is preferably located substantially in the middle of the polymeric foam layer.
   Item 23 is the adhesive assembly according to any of items 16 to 22, wherein the plurality of embedded fibers is arranged in such a way as to form a netting.
   Item 24 is the adhesive assembly according to any of items 16 to 23, wherein the polymeric foam layer comprises a material selected from the group consisting of polyacrylates, polyurethanes, polyolefins, polystyrenes, polyvinyls, natural rubbers, synthetic rubbers, and any combinations or mixtures thereof.
   Item 25 is the adhesive assembly according to any of items 16 to 24, wherein the polymeric foam layer comprises a material selected from the group consisting of polyacrylates, polyurethanes, and any combinations or mixtures thereof.
   Item 26 is the adhesive assembly according to any of items 16 to 25, wherein the polymeric foam layer has a thickness comprised between 150 and 6000 µm, preferably between 200 and 3000 µm, more preferably between 500 and 1500 µm, even more preferably between 800 and 1500 µm; and wherein the polymeric foam layer preferably comprises at least 5% by volume of voids.
   Item 27 is a method of creating an adhesive joint between two support surfaces, the method comprising the steps of providing an adhesive assembly according to any of items 16 to 26 and adhering the adhesive assembly between the two support surfaces, and wherein at least one support preferably comprises glass.
   Item 28 is a composite assembly comprising an adhesive assembly according to any of items 16 to 26 adhered on a substrate surface, wherein the substrate preferably comprises glass.
   Item 29 is a method of adhering a glass panel onto a substrate, preferably a metallic support, comprising the steps of:
      a) bonding an adhesive assembly according to any of claims 16 to 26 around the contours of said glass panel; and
      b) forming an adhesive joint between said glass panel and said substrate.
   Item 30 is the use of an adhesive assembly according to any of items 16 to 26 for adhering a glass panel onto a substrate, preferably a metallic support.

The invention is further illustrated by the following examples. These examples are merely for illustrative purposes only and are not meant to be limiting on the scope of the appended claims.

### EXAMPLES

### Substrates and materials used:

3M VHB Tape # 4611 (thickness 1.1 mm), commercially available from 3M Company, St. Paul, MN/USA.
Twaron OH-10, aramid fibers, commercially available from Teijin Aramid.
3M 8959 Bi-directional Filament Tape, commercially available from 3M Company, St. Paul, MN/USA.
3M 5290 SRFA Stretch Releasing Adhesive Tape, commercially available from 3M Company, St. Paul, MN/USA.

### Lamination method:

Lamination of fibers and polymeric foam layers is performed using a standard hand roller and manual pressure.

### Examples:

### Example 1: Method of cleaving an adhesive joint

One major surface of a first 150 mm x 19 mm piece of 3M VHB tape 4611 is laminated with a series of 8 parallel Aramid fibers having a length of 150 mm and configured along the longitudinal direction of the tape. Then, a second 150 mm x 19 mm piece of 3M VHB tape 4611 is laminated to the surface of the first VHB tape having fibers laminated onto, using a standard hand roller and manual pressure. After 72 hours, this sandwich assembly is laminated on both sides to a 15 cm x 5 cm steel plate and again stored for 72 hours. Then, a small metallic paper clip bent in a such a manner as to form a single hook in one of its end, is inserted through the tape at the proximity of one of the steel plate and according to a direction substantially perpendicular to the longitudinal direction of the polymeric foam tape. The hooking device is then rotated by an angle of 90° and extracted from the polymeric foam layer grabbing the totality of the fibers and tearing them out of the polymeric foam layer, thereby weakening the adhesive joint formed by the polymeric foam tape between the two steel plates. The fibers are torn out and then grabbed and pulled by hand, thereby further weakening the adhesive joint. The two steel plates are then gently separated by hand, thereby completing the cleavage of the adhesive joint formed by the polymeric foam tape between the two steel plates.

### Example 2: Method of cleaving an adhesive joint

Instead of aramid fibers, it is made use of a fiber net obtained by dissolving the adhesive of a 3M 8959 Bi-directional Filament tape with n-heptane and MEK. After drying the fiber net, it is laminated to one major surface of a first 150 mm x 19 mm piece of 3M VHB tape 4611 and then a second 150 mm x 19 mm piece of 3M VHB tape 4611 is laminated to the surface of the first VHB tape having the fiber net laminated onto, using a standard hand roller and manual pressure. After 72 hours, this sandwich assembly is laminated on both sides to a 15 cm x 5 cm steel plate and again stored for 72 hours. Then, a small metallic paper clip bent in a such a manner as to form a single hook in one of its end, is inserted through the tape at the proximity of one of the steel plate and according to a direction substantially perpendicular to the longitudinal direction of the polymeric foam tape. The hooking device is then rotated by an angle of 90° and extracted from the polymeric foam layer grabbing the totality of the fibers and tearing them out of the polymeric foam layer, thereby cleaving almost fully the adhesive joint formed by the polymeric foam tape between the two steel plates. The two steel plates are then gently separated by hand, thereby completing the cleavage of the adhesive joint formed by the polymeric foam tape between the two steel plates.

### Example 3: Adhesive assembly

One major surface of a first 150 mm x 19 mm piece of 3M VHB tape 4611 is laminated with a series of 8 parallel Aramid fibers having a length of 150 mm and configured along the longitudinal direction of the tape. Then, a second 150 mm x 19 mm piece of 3M VHB tape 4611 is laminated to the surface of the first VHB tape having fibers laminated onto, using a standard hand roller and manual pressure. After 72 hours, this sandwich assembly is laminated on both sides to a 3M 5290 SRFA Stretch Releasing Adhesive Tape having the dimensions of the first and second piece of VHB tape 4611 and the resulting assembly is again stored for 72 hours, thereby forming an adhesive assembly according to the invention.

## Claims

1. A method of cleaving an adhesive joint between two support surfaces, the method comprising the steps of:
a) providing a polymeric foam layer comprising a plurality of fibers having a tenacity of above 30 cN/tex when measured according to test method DIN EN ISO 5079, wherein said fibers are at least partially embedded in said polymeric foam layer;
b) forming an adhesive joint between two support surfaces with said polymeric foam;
c) mechanically extracting at least part of said plurality of embedded fibers out of said polymeric foam layer thereby cleaving or at least partially weakening the adhesive joint formed with said polymeric foam layer;
d) optionally, separating said two support surfaces; and
e) optionally, removing the portions of polymeric foam layer still remaining on said two support surfaces.

2. A method according to claim 1, wherein the adhesive joint between the two support surfaces is formed by a pressure sensitive adhesive layer comprising said polymeric foam or by a layer assembly of a layer comprising said polymeric foam and a pressure sensitive adhesive layer.

3. A method according to any of claim 1 or 2, wherein the step of mechanically extracting at least part of the plurality of embedded fibers out of the polymeric foam layer, comprises the steps of:
a) inserting a hooking device through the polymeric foam layer;
b) extracting said hooking device in a such way as to grab at least part of the plurality of embedded fibers during the extraction step; and
c) optionally, extracting the remaining fibers still embedded the polymeric foam layer after the step of extracting the hooking device.

4. A method according to any of the preceding claims, wherein the fibers have a tenacity of above 50, preferably above 80, more preferably above 100, even more preferably above 150, still more preferably above 200, yet more preferably above 250 cN/tex, when measured according to test method DIN EN ISO 5079.

5. A method according to any of the preceding claims, wherein the fibers have an average diameter comprised between 10 and 500 µm, preferably between 30 and 250 µm, more preferably between 50 and 150 µm.

6. A method according to any of the preceding claims, wherein the fibers comprise a natural, organic or inorganic material selected from the group consisting of hemp, kenaf, sisal, coal, silk, viscose, glass, E-glass, liquid crystal polymers, polyethylene, polypropylene, UHMW-polyethylene, polyester, polyamide, aramid, carbon, nylon, rayon, polybenzimidazole, poly(m-phenylene-isophthalamide), poly(p-phenylene-terephthalamide, polyamide-hydrazide, and any combinations or mixtures thereof.

7. A method according to any of the preceding claims, wherein the plurality of fibers is arranged substantially in the longitudinal direction of the polymeric foam layer, and preferably in such a way that the fibers are substantially parallel to each other.

8. A method according to any of the preceding claims, wherein the fibers are arranged into a plurality of yarns of fibers.

9. A method according to any of the preceding claims, wherein the plurality of fibers is arranged in such a way as to form a netting.

10. A method according to any of the preceding claims, wherein the polymeric foam layer comprises a material selected from the group consisting of polyacrylates, polyurethanes, polyolefins, polystyrenes, polyvinyls, natural rubbers, synthetic rubbers, and any combinations or mixtures thereof.

11. A method according to any of the preceding claims, wherein the polymeric foam layer has two major opposite surfaces and a stretch releasing adhesive bonding tape arranged on at least one major surface of said polymeric foam layer.

12. An adhesive assembly comprising a polymeric foam layer having two opposite major surfaces and a stretch releasing adhesive bonding tape arranged on at least one major surface of said polymeric foam layer, wherein said polymeric foam layer comprises a plurality of fibers at least partially embedded in said polymer foam layer and having a tenacity of above 30 cN/tex, when measured according to test method DIN EN ISO 5079.

13. An adhesive assembly according to claim 12, wherein the stretch releasing adhesive bonding tape comprises a polymeric film backing comprising two opposite major surfaces and a pressure sensitive adhesive layer coated on at least one major surface of said polymeric film backing, wherein the polymeric film backing preferably comprises a material selected from the group consisting of polyolefins, polyacrylates, polyurethanes, polystyrenes, polyvinyls, polyamides, and any combinations or mixtures thereof.

14. An adhesive assembly according to any of claim 12 or 13, wherein the fibers have a tenacity above 50, preferably above 80, more preferably above 100, even more preferably above 150, still more preferably above 200, yet more preferably above 250 cN/tex, when measured according to test method DIN EN ISO 5079.

15. Use of an adhesive assembly according to any of claims 12 to 14 for adhering a glass panel onto a substrate, preferably a metallic support.

## Patentansprüche

1. Verfahren zum Trennen einer Klebverbindung zwischen zwei Stützflächen, wobei das Verfahren folgende Schritte umfasst:
a) das Bereitstellen einer Polymerschaumschicht, die eine Vielzahl von Fasern mit einer Festigkeit von mehr als 30 cN/tex bei Messung gemäß dem Prüfverfahren DIN EN ISO 5079 aufweist, wobei die Fasern zumindest teilweise in die Polymerschaumschicht eingebettet sind;
b) das Bilden einer Klebverbindung zwischen zwei Stützflächen mit dem Polymerschaum;
c) das mechanische Extrahieren von zumindest einem Teil der Vielzahl von eingebetteten Fasern aus der Polymerschaumschicht, wodurch die mit der Polymerschaumschicht gebildete Klebverbindung getrennt oder zumindest teilweise geschwächt wird;
d) wahlweise das Trennen der beiden Stützflächen; und
e) wahlweise das Entfernen der Teile der Polymerschaumschicht, die noch auf den beiden Stützflächen verbleiben.

2. Verfahren nach Anspruch 1, wobei die Klebverbindung zwischen den beiden Stützflächen durch eine Schicht aus druckempfindlichem Klebstoff gebildet wird, die den Polymerschaum umfassen, oder durch eine Schichtanordnung aus dem Polymerschaum und einer Schicht aus druckempfindlichen Klebstoff.

3. Verfahren nach einem der Ansprüche 1 oder 2, wobei der Schritt des mechanischen Extrahierens von zumindest einem Teil der Vielzahl von eingebetteten Fasern aus der Polymerschaumschicht folgende Schritte umfasst:
a) das Einführen einer Hakenvorrichtung durch die Polymerschaumschicht;
b) das Extrahieren der Hakenvorrichtung auf solche Weise, dass zumindest ein Teil der Vielzahl von eingebetteten Fasern während des Extraktionsschritts erfasst wird; und
c) wahlweise das Extrahieren der verbleibenden Fasern, die nach dem Schritt der Hakenvorrichtungsextraktion noch in der Polymerschaumschicht eingebettet sind.

4. Verfahren nach einem der vorstehenden Ansprüche, wobei die Fasern bei Messung gemäß dem Prüfverfahren DIN EN ISO 5079 eine Festigkeit von mehr als 50 aufweisen, vorzugsweise mehr als 80, mehr bevorzugt mehr als 100, noch mehr bevorzugt mehr als 150, noch mehr bevorzugt mehr als 200, weiterhin noch mehr bevorzugt mehr als 250 cN/tex.

5. Verfahren nach einem der vorstehenden Ansprüche, wobei die Fasern einen durchschnittlichen Durchmesser von 10 bis 500 µm aufweisen, vorzugsweise von 30 bis 250 µm, mehr bevorzugt von 50 bis 150 µm.

6. Verfahren nach einem der vorstehenden Ansprüche, wobei die Fasern ein natürliches, organisches oder anorganisches Material ausgewählt aus der Gruppe bestehend aus Hanf, Kenaf, Sisal, Kohle, Seide, Viskose, Glas, E-Glas, Flüssigkristallpolymeren, Polyethylen, Polypropylen, UHMW-Polyethylen, Polyester, Polyamid, Aramid, Kohlenstoff, Nylon, Rayon, Polybenzimidazol, Poly(m- phenylenisophthalamid), Poly(p-phenylenterephthalamid, Polyamidhydrazid und sämtlichen Kombinationen oder Mischungen davon umfassen.

7. Verfahren nach einem der vorstehenden Ansprüche, wobei die Vielzahl von Fasern im Wesentlichen in Längsrichtung der Polymerschaumschicht angeordnet ist, und vorzugsweise auf eine solche Weise, dass die Fasern im Wesentlichen parallel zueinander verlaufen.

8. Verfahren nach einem der vorstehenden Ansprüche, wobei die Fasern in einer Vielzahl von Fasergarnen angeordnet sind.

9. Verfahren nach einem der vorstehenden Ansprüche, wobei die Vielzahl von Fasern so angeordnet ist, dass sie ein Geflecht bilden.

10. Verfahren nach einem der vorstehenden Ansprüche, wobei die Polymerschaumschicht ein Material ausgewählt aus der Gruppe bestehend aus Polyacrylaten, Polyurethanen, Polyolefinen, Polystyrolen, Polyvinylen, Naturkautschuk, Synthesekautschuk und sämtlichen Kombinationen oder Mischungen davon umfasst.

11. Verfahren nach einem der vorstehenden Ansprüche, wobei die Polymerschaumschicht zwei entgegengesetzte Hauptflächen und ein durch Dehnung lösbares Klebeband aufweist, das auf mindestens einer Hauptfläche der Polymerschaumschicht angeordnet ist.

12. Klebeanordnung, die eine Polymerschaumschicht mit zwei einander entgegengesetzten Hauptflächen und ein durch Dehnung lösbares Klebeband aufweist, das auf mindestens einer Hauptfläche der Polymerschaumschicht angeordnet ist, wobei die Polymerschaumschicht eine Vielzahl von Fasern umfasst, die zumindest teilweise in die Polymerschaumschicht eingebettet ist und eine Festigkeit von mehr als 30 cN/tex bei Messung gemäß dem Prüfverfahren DIN EN ISO 5079 aufweist.

13. Klebeanordnung nach Anspruch 12, wobei das durch Dehnung lösbare Klebeband eine Polymerfolienverstärkung umfasst, die zwei einander entgegengesetzte Hauptflächen und eine druckempfindliche Klebstoffschicht umfasst, die auf mindestens einer Hauptfläche der Polymerfolienverstärkung aufgebracht ist, wobei die Polymerfolienverstärkung vorzugsweise ein Material ausgewählt aus der Gruppe bestehend aus Polyolefinen, Polyacrylaten, Polyurethanen, Polystyrolen, Polyvinylen, Polyamiden und sämtlichen Kombinationen oder Mischungen davon umfasst.

14. Klebeanordnung nach einem der Ansprüche 12 oder 13, wobei die Fasern eine Festigkeit von mehr als 50 aufweisen, vorzugsweise von mehr als 80, mehr bevorzugt mehr als 100, noch mehr bevorzugt mehr als 150, noch mehr bevorzugt mehr als 200, weiterhin noch mehr bevorzugt mehr als 250 cN/tex bei Messung gemäß dem Prüfverfahren DIN EN ISO 5079.

15. Verwendung einer Klebeanordnung nach einem der Ansprüche 12 bis 14 zum Kleben an einer Glasscheibe auf einem Substrat, vorzugsweise einer Metallhalterung.

## Revendications

1. Procédé de clivage d'un joint adhésif entre deux surfaces de support, le procédé comprenant les étapes consistant à :
a) fournir une couche de mousse polymère comprenant une pluralité de fibres possédant une ténacité supérieure à 30 cN/tex lorsqu'on mesure selon le procédé de test DIN EN ISO 5079, dans lequel lesdites fibres sont au moins partiellement intégrées dans ladite couche de mousse polymère ;
b) former un joint adhésif entre deux surfaces de support avec ladite mousse polymère ;
c) extraire mécaniquement au moins une partie de ladite pluralité de fibres intégrées de ladite couche de mousse polymère, ce qui clive ou affaiblit au moins partiellement le joint adhésif formé avec ladite couche de mousse polymère ;
d) facultativement, séparer lesdites deux surfaces de support ; et
e) facultativement, retirer les parties de couche de mousse polymère restant encore sur lesdites deux surfaces de support.

2. Procédé selon la revendication 1, dans lequel le joint adhésif entre les deux surfaces de support est formé par une couche d'adhésif sensible à la pression comprenant ladite mousse polymère ou par un ensemble de couches d'une couche comprenant ladite mousse polymère et d'une couche d'adhésif sensible à la pression.

3. Procédé selon l'une quelconque des revendications 1 ou 2, dans lequel l'étape consistant à extraire mécaniquement au moins une partie de la pluralité de fibres intégrées de la couche de mousse polymère, comprend les étapes consistant à :
a) insérer un dispositif d'accrochage à travers la couche de mousse polymère ;
b) extraire ledit dispositif d'accrochage d'une manière telle à saisir au moins une partie de la pluralité de fibres intégrées durant l'étape d'extraction ; et
c) facultativement, extraire les fibres restantes toujours intégrées dans la couche de mousse polymère après l'étape d'extraction du dispositif d'accrochage.

4. Procédé selon l'une quelconque des revendications précédentes, dans lequel les fibres ont une ténacité supérieure à 50, de préférence supérieure à 80, plus préférablement supérieure à 100, même plus préférablement supérieure à 150, toujours plus préférablement supérieure à 200, encore plus préférablement supérieure à 250 cN/tex, lorsqu'on mesure selon le procédé de test DIN EN ISO 5079.

5. Procédé selon l'une quelconque des revendications précédentes, dans lequel les fibres ont un diamètre moyen compris entre 10 et 500 µm, de préférence entre 30 et 250 µm, plus préférablement entre 50 et 150 µm.

6. Procédé selon l'une quelconque des revendications précédentes, dans lequel les fibres comprennent un matériau naturel, organique ou inorganique choisi dans le groupe constitué de chanvre, ambre jaune, sisal, charbon, soie, viscose, verre, verre E, polymères de cristal liquide, polyéthylène, polypropylène, polyester à masse moléculaire ultra-élevée, polyester, polyamide, aramide, carbone, nylon, rayonne, polybenzimidazole, poly(m-phénylène-isophtalamide), poly(p-phénylène-téréphtalamide, polyamide- hydrazide, et n'importe quelles combinaisons ou mélanges de ces substances.

7. Procédé selon l'une quelconque des revendications précédentes, dans lequel la pluralité de fibres est arrangée essentiellement dans la direction longitudinale de la couche de mousse polymère, et de préférence d'une manière telle que les fibres sont essentiellement parallèles les unes aux autres.

8. Procédé selon l'une quelconque des revendications précédentes, dans lequel les fibres sont arrangées en une pluralité de fils de fibres.

9. Procédé selon l'une quelconque des revendications précédentes, dans lequel la pluralité de fibres est arrangée d'une manière telle à former un treillis.

10. Procédé selon l'une quelconque des revendications précédentes, dans lequel la couche de mousse polymère comprend un matériau choisi dans le groupe constitué de polyacrylates, polyuréthanes, polyoléfines, polystyrènes, polyvinyles, caoutchoucs naturels, caoutchoucs synthétiques, et n'importe quelles combinaisons ou mélanges de ces substances.

11. Procédé selon l'une quelconque des revendications précédentes, dans lequel la couche de mousse polymère a deux surfaces opposées principales et un ruban adhésif de liaison à décollement par étirement disposé sur au moins une surface principale de ladite couche de mousse polymère.

12. Ensemble adhésif comprenant une couche de mousse polymère possédant deux surfaces principales opposées et un ruban adhésif de liaison à décollement par étirement disposé sur au moins une surface principale de ladite couche de mousse polymère, dans lequel ladite couche de mousse polymère comprend une pluralité de fibres au moins partiellement intégrées dans ladite couche de mousse polymère et possédant une ténacité supérieure à 30 cN/tex, lorsqu'on mesure selon le procédé de test DIN EN ISO 5079.

13. Ensemble adhésif selon la revendication 12, dans lequel le ruban adhésif de liaison à décollement par étirement comprend un support en film polymère comprenant deux surfaces principales opposées et une couche d'adhésif sensible à la pression revêtue sur au moins une surface principale dudit support en film polymère, dans lequel le support en film polymère comprend de préférence un matériau choisi dans le groupe constitué de polyoléfines, polyacrylates, polyuréthanes, polystyrènes, polyvinyles, polyamides, et n'importe quelles combinaisons ou mélanges de ces substances.

14. Ensemble adhésif selon l'une quelconque des revendications 12 ou 13, dans lequel les fibres ont une ténacité supérieure à 50, de préférence supérieure à 80, plus préférablement supérieure à 100, même plus préférablement supérieure à 150, toujours plus préférablement supérieure à 200, encore plus préférablement supérieure à 250 cN/tex, lorsqu'on mesure selon le procédé de test DIN EN ISO 5079.

15. Utilisation d'un ensemble adhésif selon l'une quelconque des revendications 12 à 14 pour faire adhérer un panneau de verre sur un substrat, de préférence un support métallique.
